# EUROPEAN PATENT APPLICATION

(11) **EP 4 339 436 A1**
(43) Date of publication of application: **20.03.2024**
(21) Application number: 23197790.1
(22) Date of filing: 15.09.2023
(51) Int. Cl.: F02C 7/042, F02C 7/057, F03D 13/00

(54) **AIRCRAFT PROPULSION SYSTEM WITH VARIABLE AREA INLET**

(30) Priority: 15.09.2022 US 202263406926 P
(71) Applicant: Rohr, Inc., Chula Vista, CA 91910-2098 (US)
(72) Inventor: GORMLEY, Timothy, Bonita, 91902 (US)
(74) Representative: Dehns

(57) **Abstract**

An assembly for an aircraft propulsion system (20) includes a variable area inlet (72), and the variable area inlet (72) includes an inlet structure (74), an inlet lip (76), an inlet orifice (78) and an inlet passage (80) extending within the variable area inlet (72) from the inlet orifice (78). The inlet lip (76) is configured to pivot about a pivot axis (90) between a first position and a second position. The inlet orifice (78) is formed by and between the inlet structure (74) and the inlet lip (76). The inlet orifice (78) has a first area (92A) when the inlet lip (76) is in the first position. The inlet orifice (78) has a second area (92B) when the inlet lip (76) is in the second position. The second area (92B) is different than the first area (92A).

## Description

This application claims priority to U.S. Provisional Patent Application No. 63/406,926 filed September 15, 2023.

### TECHNICAL FIELD

This disclosure relates generally to an aircraft propulsion system and, more particularly, to an inlet for the aircraft propulsion system with a variable airflow inlet area.

### BACKGROUND

An aircraft propulsion system may include an inlet structure and a gas turbine engine. The inlet structure directs air into the gas turbine engine. Some known inlet structures include a variable airflow inlet area for tailoring a mass flow of the air entering the gas turbine engine. While these known inlet structures have various advantages, there is still room in the art for improvement. There is a need in the art therefore for an improved inlet assembly with a variable airflow inlet area.

### SUMMARY

According to an aspect of the present disclosure, an assembly is provided for an aircraft propulsion system. This assembly includes a variable area inlet, and the variable area inlet includes an inlet structure, an inlet lip, an inlet orifice and an inlet passage extending within the variable area inlet from the inlet orifice. The inlet lip is configured to pivot about a pivot axis between a first position and a second position. The inlet orifice is formed by and between the inlet structure and the inlet lip. The inlet orifice has a first area when the inlet lip is in the first position. The inlet orifice has a second area when the inlet lip is in the second position. The second area is different than the first area.

According to another aspect of the present disclosure, another assembly is provided for an aircraft. This assembly includes a plurality of aircraft propulsion systems. Each of the aircraft propulsion systems includes a variable area inlet, and the variable area inlet includes an inlet structure, an inlet lip, an inlet orifice and an inlet passage extending within the variable area inlet from the inlet orifice. The inlet lip is configured to pivot about a pivot axis between a first position and a second position. The inlet orifice is formed by and between the inlet structure and the inlet lip. The inlet orifice has a first area when the inlet lip is in the first position. The inlet orifice has a second area when the inlet lip is in the second position. The second area is different than the first area.

According to another aspect of the present disclosure, another assembly is provided for an aircraft propulsion system. This assembly includes a variable area inlet, and the variable area inlet includes an inlet structure, an inlet lip, an inlet orifice and an inlet passage extending within the variable area inlet from the inlet orifice. The inlet lip is configured to pivot about a pivot axis between a first position and a second position. The inlet orifice is formed by and between a portion of the inlet structure and a portion of the inlet lip. The inlet orifice has a first area when the inlet lip is in the first position. The inlet orifice has a second area when the inlet lip is in the second position. The second area is different than the first area. The pivot axis is laterally offset from the portion of the inlet lip when the inlet lip is in the first position and the second position.

According to another aspect of the present disclosure, another assembly is provided for an aircraft propulsion system. This assembly includes a gas turbine engine and a variable area inlet. The gas turbine engine includes a bypass flowpath and a core flowpath. The variable area inlet is configured to direct air into the bypass flowpath and the core flowpath. The variable area inlet includes an inlet structure, an inlet lip, an inlet orifice and an inlet passage extending within the variable area inlet from the inlet orifice. The inlet lip is configured to pivot about a pivot axis between a first position and a second position. The inlet orifice is formed by and between the inlet structure and the inlet lip. The inlet orifice has a first area when the inlet lip is in the first position. The inlet orifice has a second area when the inlet lip is in the second position. The second area is different than the first area.

According to still another aspect of the present disclosure, another assembly is provided for an aircraft propulsion system. This assembly includes a variable area inlet, and the variable area inlet includes an inlet structure, an inlet lip, an inlet orifice and an inlet passage extending within the variable area inlet from the inlet orifice. The inlet lip is configured to pivot about a pivot axis between an open position and a closed position. The inlet orifice is formed by and is laterally between a portion of the inlet structure and a portion of the inlet lip. The inlet orifice has a first area when the inlet lip is in the open position. The inlet orifice has a second area when the inlet lip is in the closed position. The second area is less than the first area. The pivot axis is disposed laterally between the portion of the inlet structure and the portion of the inlet lip when the inlet lip is in the open position and the closed position.

The pivot axis may be laterally offset from the portion of the inlet lip in a lateral direction towards the portion of the inlet structure when the inlet lip is in the first position and the second position.

The portion of the inlet structure may form a first side of the inlet orifice. The portion of the inlet lip may form a second side of the inlet orifice. The pivot axis may be located at the first side of the inlet orifice.

The portion of inlet structure may form a first side of the inlet orifice. The portion of inlet lip may form a second side of the inlet orifice. The pivot axis may be located laterally between the first side of the inlet orifice and the second side of the inlet orifice when the inlet lip is in the first position and the second position.

The inlet orifice may also be formed by and extend vertically between opposing portions of the inlet lip.

The inlet lip may include a first sidewall, a second sidewall and an endwall extending vertically between and connected to the first sidewall and the second sidewall. The endwall may be configured as or otherwise include the portion of the inlet lip.

The first sidewall and the second sidewall may form respective opposing portions of the inlet orifice.

The first position may be a fully open position and/or the second position may be a fully closed position.

The inlet lip may be pivotally attached to the inlet structure.

The inlet orifice may be formed by and may extend laterally between a portion of the inlet structure and a portion of the inlet lip. The pivot axis may be laterally offset from the portion of the inlet lip.

The pivot axis may be laterally offset from the portion of the inlet lip in a lateral direction towards the portion of the inlet structure.

The portion of the inlet structure and the portion of the inlet lip may be on laterally opposite sides of the inlet orifice.

The inlet structure may form a first side of the inlet orifice. The inlet lip may form a second side of the inlet orifice. The pivot axis may be located at (e.g., on, adjacent or proximate) the first side of the inlet orifice.

The inlet structure may form a first side of the inlet orifice. The inlet lip may form a second side of the inlet orifice. The pivot axis may be located laterally between the first side of the inlet orifice and the second side of the inlet orifice.

The inlet orifice may also be formed by and extend between opposing portions of the inlet lip.

The inlet orifice may extend horizontally between a first horizonal orifice side and a second horizonal orifice side. The inlet orifice may extend vertically between a first vertical orifice side and a second vertical orifice side. The first horizontal orifice side may be formed by the inlet structure. The second horizontal orifice side, the first vertical orifice side and the second vertical orifice side may be formed by the inlet lip.

The inlet orifice may extend horizontally between a first horizonal orifice side and a second horizonal orifice side. The inlet orifice may extend vertically between a first vertical orifice side and a second vertical orifice side. The first vertical orifice side may be formed by the inlet structure. The first horizontal orifice side, the second horizontal orifice side and the second vertical orifice side may be formed by the inlet lip.

The inlet lip may include a first sidewall, a second sidewall and an endwall extending between and connected to the first sidewall and the second sidewall.

The first sidewall, the second sidewall and the endwall may form respective portions of the inlet orifice.

The first sidewall may be planar. In addition or alternatively, the second sidewall may be planar. In addition or alternatively, the endwall may be arcuate.

The inlet orifice may have a curvilinear perimeter.

The inlet orifice may have a circular perimeter.

The inlet orifice may have a D-shaped perimeter.

The inlet orifice may have a polygonal perimeter.

The first position may be an (e.g., fully) open position. The second position may be a (e.g., fully) closed position.

The inlet lip may be configured to pivot to the first position for subsonic aircraft flight. The inlet lip may be configured to pivot to the second position of supersonic aircraft flight.

The second area may be less than the first area.

The first area may be a first frontal area. In addition or alternatively, the second area may be a second frontal area.

The first area and the second area may be measured in a reference plane perpendicular to a centerline of the aircraft propulsion system.

The inlet structure may be a fixed structure.

The inlet structure may be configured as a duct.

The variable area inlet may be arranged with an aircraft airframe.

The variable area inlet may be integral with an aircraft airframe.

The variable area inlet may be configured discrete from an aircraft airframe.

The assembly may also include a gas turbine engine configured to receive incoming air through the inlet orifice.

The inlet lip of a first of the aircraft propulsion systems may pivot in a first direction to open the inlet orifice of the first of the aircraft propulsion systems. The inlet lip of a second of the aircraft propulsion systems may pivot in a second direction to open the inlet orifice of the second of the aircraft propulsion systems.

The second direction may be opposite the first direction.

The inlet lip of a first of the aircraft propulsion systems may pivot in a first direction to open the inlet orifice of the first of the aircraft propulsion systems. The inlet lip of a second of the aircraft propulsion systems may pivot in the first direction to open the inlet orifice of the second of the aircraft propulsion systems.

The inlet lip of a first of the aircraft propulsion systems and the inlet lip of a second of the aircraft propulsion systems may be configured to pivot in unison.

The inlet lip of a first of the aircraft propulsion systems and the inlet lip of a second of the aircraft propulsion systems may be configured to pivot in at a common speed.

The inlet lip of a first of the aircraft propulsion systems and the inlet lip of a second of the aircraft propulsion systems may be configured to pivot concurrently.

The inlet lip of a first of the aircraft propulsion systems and the inlet lip of a second of the aircraft propulsion systems may be configured to pivot at different speeds.

The inlet lip of a first of the aircraft propulsion systems and the inlet lip of a second of the aircraft propulsion systems may be configured to pivot independent of one another.

The present disclosure may include any one or more of the individual features disclosed above and/or below alone or in any combination thereof.

The foregoing features and the operation of the invention will become more apparent in light of the following description and the accompanying drawings.

### BRIEF DESCRIPTION OF THE DRAWINGS

FIG. 1 is a schematic illustration of an aircraft propulsion system.
FIGS. 2 and 3 are schematic side view illustrations of a portion of the aircraft propulsion system with its variable area inlet in various positions.
FIGS. 4 and 5 are schematic front view illustrations of a portion of an aircraft with the variable area inlet of FIGS. 2 and 3 in various positions.
FIGS. 6 and 7 are schematic front view illustrations of a portion of the aircraft with another variable area inlet in various positions.
FIGS. 8 and 9 are partial schematic top view illustrations of the aircraft with multiple aircraft propulsion systems with their variable area inlets in various positions.
FIG. 10 is a schematic illustration of the aircraft with its variable area inlet arranged remote from an airframe of the aircraft.
FIGS. 11 and 12 are front view schematic illustrations of the variable area inlet with various alternative inlet orifice geometries.
FIG. 13 schematically illustrates actuating movable inlet lips for different variable area inlets in a common direction.
FIG. 14 schematically illustrates actuating movable inlet lips for different variable area inlets in different (e.g., opposite) directions.

### DETAILED DESCRIPTION

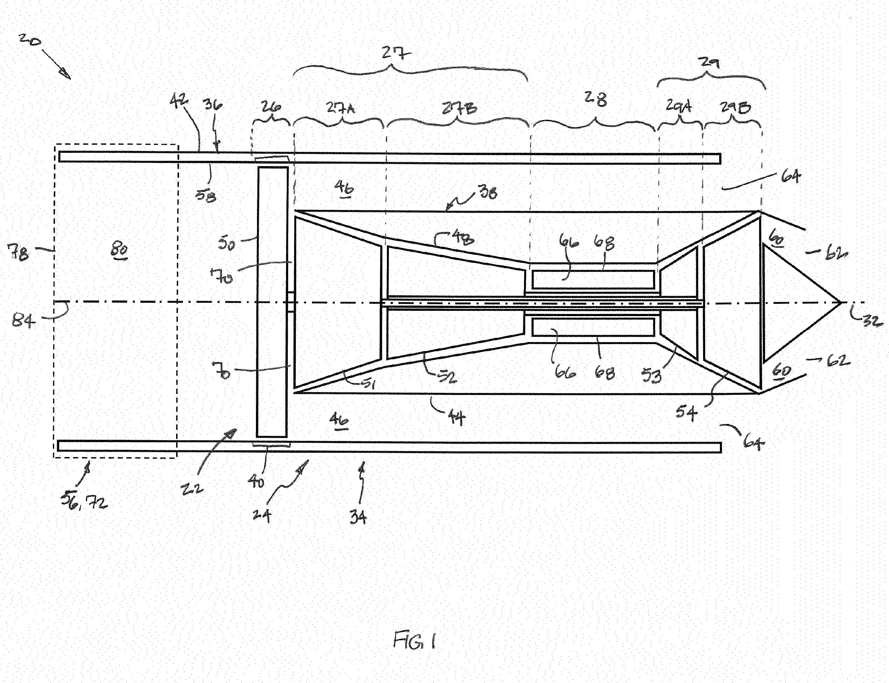

FIG. 1 is a schematic illustration of a propulsion system 20 for an aircraft. Briefly, the aircraft may be an airplane, a drone (e.g., an unmanned aerial vehicle (UAV)) or any other manned or unmanned aerial vehicle. The aircraft propulsion system 20 includes a gas turbine engine 22 and a nacelle 24.

The gas turbine engine 22 may be configured as a turbofan engine. The gas turbine engine 22 of FIG. 1, for example, includes a fan section 26, a compressor section 27, a combustor section 28 and a turbine section 29. The compressor section 27 may include a low pressure compressor (LPC) section 27A and a high pressure compressor (HPC) section 27B. The turbine section 29 may include a high pressure turbine (HPT) section 29A and a low pressure turbine (LPT) section 29B.

The engine sections 26-29B may be arranged sequentially along an axial centerline 32 (e.g., a rotational axis) of the gas turbine engine 22 within an aircraft propulsion system housing 34. This propulsion system housing 34 includes an outer housing structure 36 and an inner housing structure 38.

The outer housing structure 36 includes an outer case 40 (e.g., a fan case) and an outer structure 42 of the nacelle 24; e.g., an outer nacelle structure. The outer case 40 houses at least the fan section 26. The outer nacelle structure 42 houses and provides an aerodynamic cover for the outer case 40. The outer nacelle structure 42 also covers a portion of an inner structure 44 of the nacelle 24; e.g., an inner nacelle structure, which may also be referred to as an inner fixed structure (IFS). More particularly, the outer nacelle structure 42 axially overlaps and extends circumferentially about (e.g., completely around) the inner nacelle structure 44. The outer nacelle structure 42 and the inner nacelle structure 44 thereby at least partially or completely form a (e.g., annular) bypass flowpath 46 within the aircraft propulsion system 20.

The inner housing structure 38 includes an inner case 48 (e.g., a core case) and the inner nacelle structure 44. The inner case 48 houses one or more of the engine sections 27A, 27B, 28, 29A and 29B, which engine sections 27A-29B may be collectively referred to as an engine core. The inner nacelle structure 44 houses and provides an aerodynamic cover for the inner case 48.

Each of the engine sections 26, 27A, 27B, 29A and 29B includes a bladed rotor 50-54. The fan rotor 50 and the LPC rotor 51 are connected to and driven by the LPT rotor 54 through a low speed shaft. The HPC rotor 52 is connected to and driven by the HPT rotor 53 through a high speed shaft. The shafts are rotatably supported by a plurality of bearings (not shown). Each of these bearings is connected to the aircraft propulsion system housing 34 (e.g., the inner case 48) by at least one stationary structure such as, for example, an annular support strut.

During operation, air enters the aircraft propulsion system 20 through an aircraft propulsion system inlet structure 56. This air is directed through an inlet duct 58 (e.g., a fan duct in the fan section 26) and into a (e.g., annular) core flowpath 60 and the bypass flowpath 46. The core flowpath 60 extends axially along the axial centerline 32 within the aircraft propulsion system 20, through the engine sections 27A-29B, to a core nozzle outlet 62, where the core flowpath 60 is radially within the inner case 48. The bypass flowpath 46 extends axially along the axial centerline 32 within the aircraft propulsion system 20 to a bypass nozzle outlet 64, where the bypass flowpath 46 is radially between the outer nacelle structure 42 and the inner nacelle structure 44. The air within the core flowpath 60 may be referred to as "core air". The air within the bypass flowpath 46 may be referred to as "bypass air".

The core air is compressed by the LPC rotor 51 and the HPC rotor 52 and directed into a combustion chamber 66 of a combustor 68 in the combustor section 28. Fuel is injected into the combustion chamber 66 through one or more fuel injectors and mixed with the compressed core air to provide a fuel-air mixture. This fuel-air mixture is ignited and combustion products thereof flow through and sequentially cause the HPT rotor 53 and the LPT rotor 54 to rotate. The rotation of the HPT rotor 53 and the LPT rotor 54 respectively drive rotation of the HPC rotor 52 and the LPC rotor 51 and, thus, compression of the air received from a core airflow inlet 70. The rotation of the LPT rotor 54 also drives rotation of the fan rotor 50, which fan rotor 50 propels bypass air through and out of the bypass flowpath 46. The aircraft propulsion system 20 of the present disclosure, however, is not limited to the exemplary gas turbine engine configuration described above.

Optimal mass flow requirements of the air entering the aircraft propulsion system 20 through the aircraft propulsion system inlet structure 56 may change depending upon one or more parameters. These parameters may include, but are not limited to, modes of operation, aircraft maneuvers and operating conditions. For example, where the aircraft flies at supersonic speeds, a first mass flow of the air may be directed through the aircraft propulsion system inlet structure 56 into the aircraft propulsion system 20. When the aircraft flies at subsonic speeds, a second mass flow of the air may be directed through the aircraft propulsion system inlet structure 56 into the aircraft propulsion system 20, where the second mass flow is greater than the first mass flow.

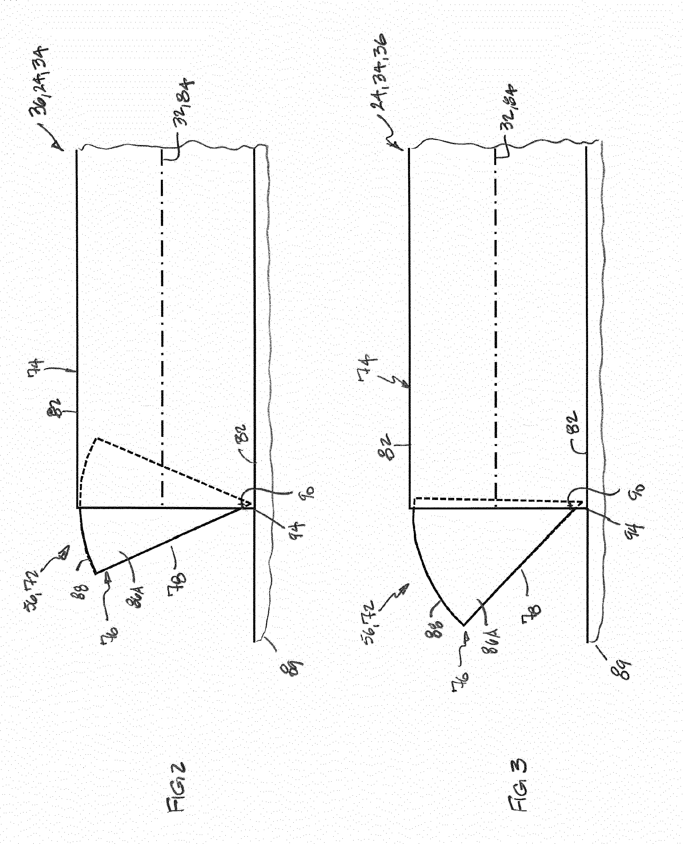

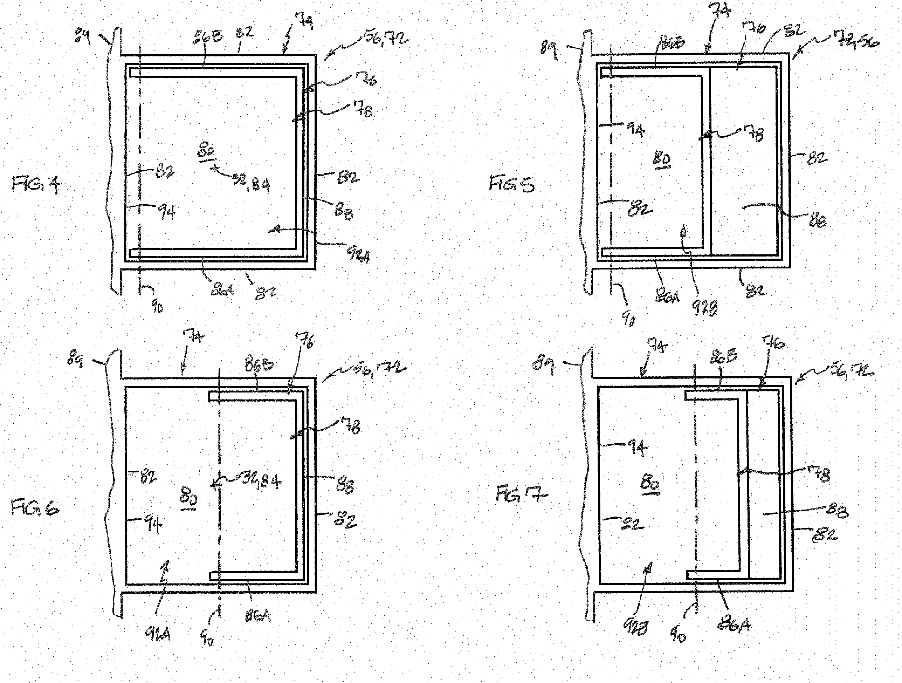

To accommodate the changing mass flow requirements for the aircraft propulsion system 20, the aircraft propulsion system inlet structure 56 is configured as a variable area inlet 72. Referring to FIGS. 2-5, this variable area inlet 72 includes a stationary inlet structure 74, a movable (e.g., pivotable) inlet lip 76, an inlet orifice 78 and an inlet passage 80 (see FIGS. 4 and 5). Briefly referring again to FIG. 1, the inlet orifice 78 forms an (e.g., sole) airflow inlet into the aircraft propulsion system 20. The inlet passage 80 extends within (e.g., through) the variable area inlet 72 from the inlet orifice 78 towards (e.g., to) the gas turbine engine 22 and its fan section 26.

Referring to FIGS. 2-5, the inlet structure 74 may be configured as a duct or another tubular body. The inlet structure 74 of FIGS. 2-5, for example, has a tubular sidewall 82. The inlet structure 74 and its sidewall 82 of FIGS. 2 and 3 extend longitudinally along a longitudinal centerline 84 of the variable area inlet 72, which longitudinal centerline 84 may be an extension of / coaxial with the axial centerline 32. The inlet structure 74 and its sidewall 82 of FIGS. 4 and 5 extend around the longitudinal centerline 84.

Referring to FIGS. 2-5, the inlet lip 76 may be configured as a channeled (e.g., C-shaped, U-shaped, V-shaped, etc.) body; e.g., a flap, a door, a sleeve, etc. The inlet lip 76 of FIGS. 4 and 5, for example, includes a (e.g., planar) first sidewall 86A, a (e.g., planar) second sidewall 86B and an (e.g., arcuate or otherwise non-planar) endwall 88. The endwall 88 extends laterally in a first lateral direction (e.g., vertically, or alternatively horizontally) between and to the first sidewall 86A and the second sidewall 86B. The endwall 88 of FIGS. 2 and 3 extends (e.g., longitudinally) along each of the sidewalls 86A, 86B (generally referred to as "86"). The endwall 88 of FIGS. 4 and 5 is connected to (e.g., formed integral with or attached to) the first sidewall 86A and the second sidewall 86B. Each of the sidewalls 86 projects laterally in a second lateral direction (e.g., horizontally, or alternatively vertically) out from the endwall 88 to a respective distal end.

The inlet lip 76 of FIGS. 2-5 is arranged with (e.g., nested within) the inlet structure 74. The inlet lip 76 may be pivotally mounted to the inlet structure 74; however, the inlet lip 76 may alternatively be pivotally mounted to another (e.g., fixed) structure of the aircraft propulsion system 20 and/or a (e.g., fixed) component of an airframe 89 of the aircraft in other embodiments. Each of the sidewalls 86, for example, may be pivotally attached to a respective portion of the inlet structure 74 by a hinge. With this arrangement, the inlet lip 76 is configured to pivot about a pivot axis 90 between a first position (e.g., an open, subsonic position of FIGS. 2 and 4) and a second position (e.g., a closed, supersonic position of FIGS. 3 and 5). The inlet lip 76 may be pivoted or otherwise moved via one or more actuators (not shown), which actuator(s) may be electric motor(s), pneumatic drive(s) or hydraulic cylinder(s).

Referring to FIGS. 4 and 5, the inlet orifice 78 extends laterally in the first lateral direction between and to (e.g., leading edges of) the first sidewall 86A and the second sidewall 86B. The inlet orifice 78 may thereby be formed (e.g., only) by and extend laterally (in the first lateral direct) between opposing portions of the inlet lip 76; e.g., the sidewalls 86. However, in other embodiments, it is contemplated the inlet orifice 78 may also at least partially (or alternatively completely) be formed by and extend between opposing portions of the inlet structure 74; e.g., see FIGS. 6 and 7. Referring again to FIGS. 4 and 5, the inlet orifice 78 extends laterally in the second lateral direction between and to (e.g., leading edges of) the endwall 88 and the inlet structure sidewall 82. The inlet orifice 78 may thereby be formed (e.g., only) by and extend laterally (in the second lateral direct) between the inlet lip 76 and the inlet structure 74.

The inlet orifice 78 may have a first area 92A when the inlet lip 76 is in its first position of FIG. 4. The inlet orifice 78 may have a second area 92B when the inlet lip 76 is in its second position of FIG. 5, where the first area 92A is different (e.g., greater) than the second area 92B. The first and the second areas 92A and 92B (generally referred to as "92") may be frontal areas. The first and the second areas 92, for example, may be measured in a reference plane perpendicular to the centerline 32, 84 and/or a trajectory of incoming air. Thus, by pivoting between the first position of FIGS. 2 and 4 and the second position of FIGS. 3 and 5, the variable area inlet 72 and its inlet lip 76 may selectively change the incoming air mass flow into the aircraft propulsion system 20. While operation of the inlet lip 76 is discussed above as moving between the first position and the second position, it is contemplated the inlet lip 76 may also (or may not) move to (and stop or otherwise pause at) one or more intermediate positions between the first and the second positions. In this manner, the variable area inlet 72 may tailor the incoming air mass flow based on different conditions, aircraft speeds, maneuvers, etc.

In some embodiments, referring to FIGS. 4 and 5, the pivot axis 90 may be located at (e.g., on, adjacent or proximate) a side 94 of the inlet orifice 78 and/or the inlet passage 80 that is opposite the endwall 88. In other embodiments, referring to FIGS. 6 and 7, the pivot axis 90 may be located at a lateral intermediate position between the endwall 88 and the inlet structure 74.

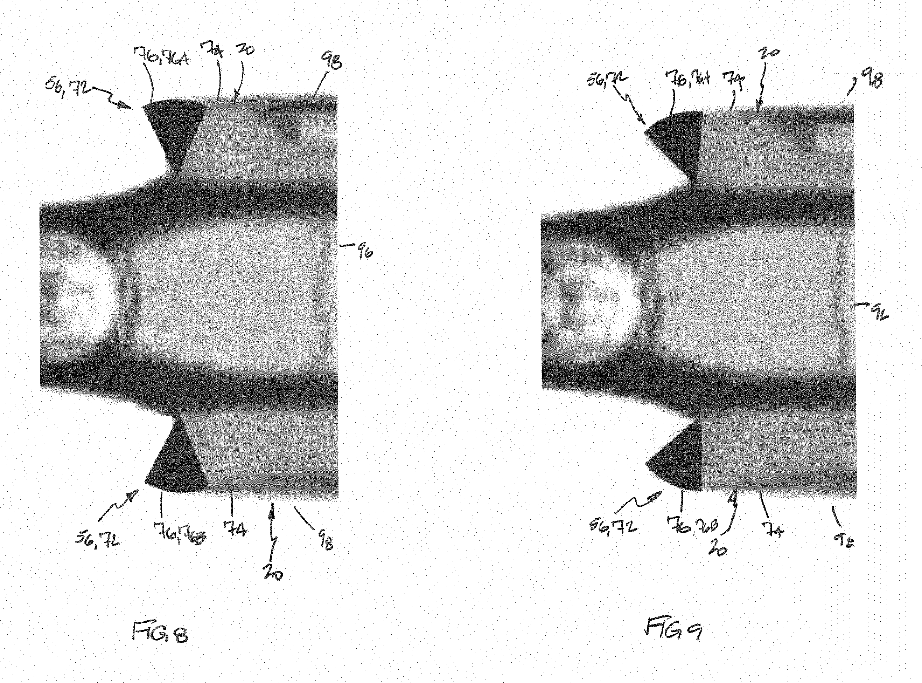

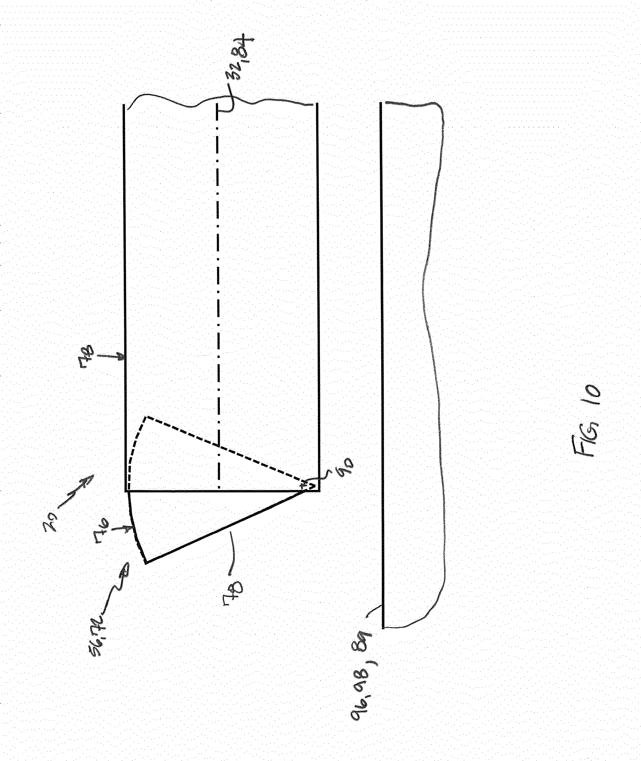

In some embodiments, referring to FIGS. 4 and 5, the variable area inlet 72 and its inlet structure 74 may be arranged with the aircraft airframe 89. The variable area inlet 72 and its inlet structure 74 of FIGS. 8 and 9, for example, may be integrated with, configured into and/or otherwise mounted to the aircraft airframe 89; e.g., a fuselage 96 of the aircraft and/or a wing 98 of the aircraft. In other embodiments, referring to FIG. 10, the variable area inlet 72 and its inlet structure 74 may be arranged discrete (e.g., independent, remote, etc.) from the aircraft airframe 89.

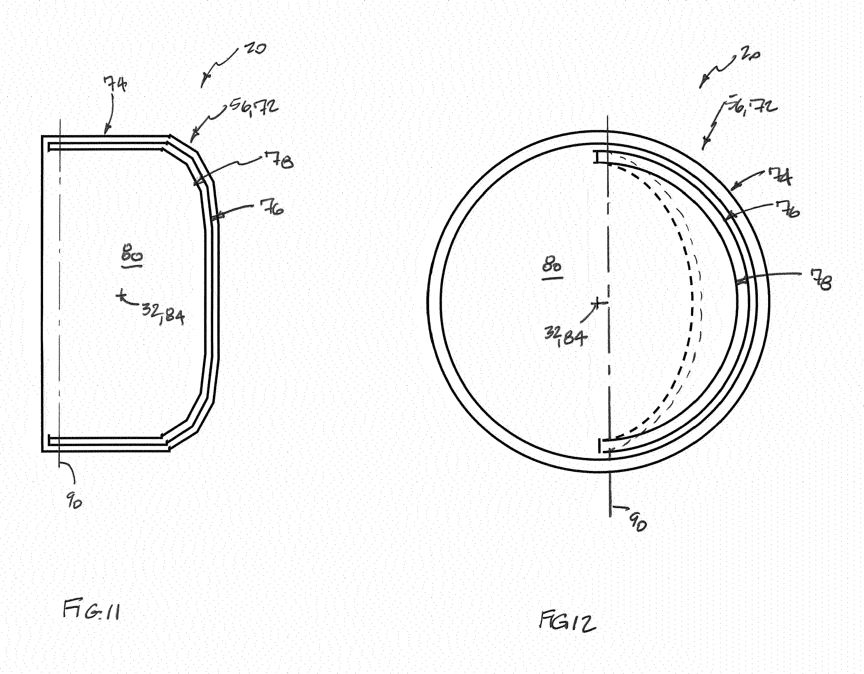

In some embodiments, referring to FIGS. 4-7, the inlet orifice 78 may be configured with a polygonal (e.g., square, rectangular, etc.) perimeter. In other embodiments, referring to FIG. 11, the inlet orifice 78 may be configured with a D-shaped perimeter. In still other embodiments, referring to FIG. 12, the inlet orifice 78 may be configured with a curvilinear perimeter; e.g., a circular, oval, splined, etc. shaped annular perimeter. The present disclosure, however, is not limited to any particular inlet orifice geometries.

In some embodiments, the inlet lip 76 may be configured with one or more locks to lock the inlet lip 76 into one or more positions; e.g., the first position, the second position and/or one or more intermediate positions. In addition or alternatively, the actuator(s) may include one or more integral locks for maintaining the position of the inlet lip 76.

In some embodiments, referring to FIGS. 8 and 9, the inlet lips 76A and 76B (generally referred to as "76") for different aircraft propulsion systems 20 may be timed to open in unison; e.g., concurrently, at common (the same) speeds, etc. In other embodiments, one of the inlet lips 76 may be moved at a different time and/or at a different speed than another one of the inlet lips 76.

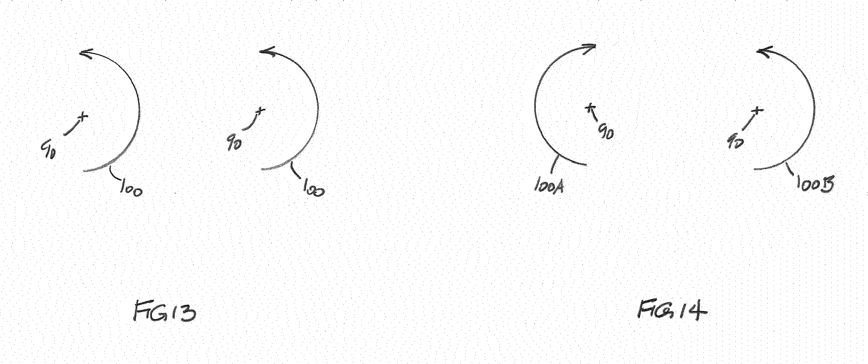

In some embodiments, referring to FIG. 13, the inlet lips 76 (not visible in FIG. 13) for different aircraft propulsion systems 20 may move (e.g., pivot) in a common (the same) direction 100. The inlet lips 76, for example, may move (e.g., clockwise) from their first positions to their second positions; e.g., when viewed in a common reference plane. In other embodiments, referring to FIG. 14, the inlet lips 76 (not visible in FIG. 13) for different aircraft propulsion systems 20 may move (e.g., pivot) in different directions 100A and 100B. The first inlet lip 76A, for example, may move in a first direction 100A (e.g., clockwise) from its first position to its second position, while the second inlet lip 76B may move in a second direction 100B (e.g., counterclockwise) from its first position to its second position; e.g., when viewed in a common reference plane.

The drawings generally illustrate the inlet lip pivot axis 90 as being vertical relative to gravity (e.g., when the aircraft is on ground and/or in level flight). The present disclosure, however, is not limited to such an exemplary arrangement. For example, in other embodiments, the inlet lip pivot axis 90 may be horizontal or otherwise oriented relative to gravity (e.g., when the aircraft is on ground and/or in level flight).

The aircraft propulsion system 20 and its variable area inlet 72 may be configured with various gas turbine engines other than the exemplary one described above with respect to FIG. 1. The gas turbine engine, for example, may be configured as a geared engine or a direct drive engine. The gas turbine engine may be configured with a single spool, with two spools (e.g., see FIG. 1), or with more than two spools. The gas turbine engine may be configured as a turbofan engine, a turboj et engine or any other type of turbine engine. The present invention therefore is not limited to any particular types or configurations of gas turbine engines. The present disclosure is also not limited to applications where the aircraft is capable to traveling supersonic speeds. The variable area inlet 72, for example, may be utilized at subsonic speeds to, for example, increase ram air intake for certain flight conditions and/or aircraft maneuvers.

While various embodiments of the present invention have been disclosed, it will be apparent to those of ordinary skill in the art that many more embodiments and implementations are possible within the scope of the invention. For example, the present invention as described herein includes several aspects and embodiments that include particular features. Although these features may be described individually, it is within the scope of the present invention that some or all of these features may be combined with any one of the aspects and remain within the scope of the invention. Accordingly, the present invention is not to be restricted except in light of the attached claims and their equivalents.

## Claims

1. An assembly for an aircraft propulsion system (20), comprising:
a variable area inlet (72) including an inlet structure (74), an inlet lip (76), an inlet orifice (78) and an inlet passage extending within the variable area inlet (72) from the inlet orifice (78);
the inlet lip (76) configured to pivot about a pivot axis (90) between a first position and a second position; and
the inlet orifice (78) formed by and between a portion of the inlet structure (74) and a portion of the inlet lip (76), the inlet orifice (78) having a first area (92A) when the inlet lip (76) is in the first position, the inlet orifice (78) having a second area (92B) when the inlet lip (76) is in the second position, the second area (92B) different than the first area (92A), and the pivot axis (90) laterally offset from the portion of the inlet lip (76) when the inlet lip (76) is in the first position and the second position.

2. The assembly of claim 1, wherein the inlet lip (76) is pivotally attached to the inlet structure (74).

3. The assembly of claim 1 or 2, wherein the pivot axis (90) is laterally offset from the portion of the inlet lip (76) in a lateral direction towards the portion of the inlet structure (74) when the inlet lip (76) is in the first position and the second position.

4. The assembly of claim 1, 2 or 3, wherein the portion of the inlet structure (74) and the portion of the inlet lip (76) are on laterally opposite sides of the inlet orifice (78).

5. The assembly of any preceding claim, wherein the portion of the inlet structure (74) forms a first side (94) of the inlet orifice (78), the portion of the inlet lip (76) forms a second side (94) of the inlet orifice (78), and the pivot axis (90) is located at the first side (94) of the inlet orifice (78).

6. The assembly of any of claims 1 to 4, wherein the portion of inlet structure (74) forms a first side (94) of the inlet orifice (78), the portion of inlet lip (76) forms a second side (94) of the inlet orifice (78), and the pivot axis (90) is located laterally between the first side (94) of the inlet orifice (78) and the second side (94) of the inlet orifice (78) when the inlet lip (76) is in the first position and the second position.

7. The assembly of any preceding claim, wherein the inlet orifice (78) is further formed by and extends vertically between opposing portions of the inlet lip (76).

8. The assembly of any preceding claim, wherein the inlet lip (76) includes a first sidewall (86A), a second sidewall (86B) and an endwall (88) extending vertically between and connected to the first sidewall (86A) and the second sidewall (86B) and the endwall (88) comprises the portion of the inlet lip (76), and optionally the first sidewall (86A) and the second sidewall (86B) form respective opposing portions of the inlet orifice (78).

9. The assembly of claim 8, wherein the first sidewall (86A) is planar, the second sidewall (86B) is planar and the endwall (88) is arcuate.

10. The assembly of any preceding claim, wherein the inlet orifice (78) has a curvilinear perimeter, a circular perimeter, a D-shaped perimeter or a polygonal perimeter.

11. The assembly of any preceding claim, wherein the first position is a fully open position and the second position is a fully closed position.

12. The assembly of any preceding claim, wherein the inlet lip (76) is configured to pivot to the first position for subsonic aircraft flight, and the inlet lip (76) is configured to pivot to the second position of supersonic aircraft flight.

13. The assembly of any preceding claim, wherein the variable area inlet (72) is arranged with an aircraft airframe (89).

14. The assembly of any of claims 1 to 12, wherein the variable area inlet (72) is configured discrete from an aircraft airframe (89).

15. The assembly of any preceding claim, further comprising a gas turbine engine (22) comprising a bypass flowpath (46) and a core flowpath (60), the variable area inlet (72) configured to direct air into the bypass flowpath (46) and the core flowpath (60).
